(19) Europäisches Patentamt
European Patent Office
Office européen des brevets

(11) **EP 4 120 192 A1**

(12) **EUROPEAN PATENT APPLICATION**

(43) Date of publication:
**18.01.2023   Bulletin 2023/03**

(51) International Patent Classification (IPC):
***G06T 7/246*** (2017.01)

(21) Application number: **21185687.7**

(22) Date of filing: **14.07.2021**

(52) Cooperative Patent Classification (CPC):
**G06T 7/246;** G06T 2207/10028; G06T 2207/20081;
G06T 2207/20084

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Bayerische Motoren Werke
Aktiengesellschaft
80809 München (DE)**

(72) Inventors:
• **Nikouei Mahani, Mohammad-Ali
80807 München (DE)**
• **Battrawy, Ramy
67655 Kaiserslautern (DE)**
• **Schuster, René
67663 Kaiserslautern (DE)**
• **Stricker, Didier
67659 Kaiserslautern (DE)**

(54)   **COMPUTING DEVICE COMPRISING AN END-TO-END LEARNING-BASED ARCHITECTURE
FOR DETERMINING A SCENE FLOW FROM TWO CONSECUTIVE SCANS OF POINT CLOUDS**

(57)   Provided is a computing device comprising an end-to-end learning-based architecture configured to determine a scene flow from two consecutive scans of point clouds. The architecture comprises a feature extraction module being configured to extract a feature set from each one of the two consecutive scans of point clouds by using random-sampling and to output the extracted feature sets to a multi-scale scene flow determination module, respectively. The multi-scale scene flow determination module is configured to determine the scene flow based on the extracted feature sets.

Fig. 1

EP 4 120 192 A1

**Description**

The present invention is directed to a computing device comprising an end-to-end learning-based architecture configured to determine a scene flow from two consecutive scans of point clouds.

Scene flow estimation is a key computer vision task for the purposes of navigation, planning tasks and autonomous driving systems. It concerns itself with the estimation of a 3D motion field with respect to the observer, thereby providing a representation of the dynamic change in the surroundings. 3D sensing quality is an important part in scene flow estimation.

Most of the known scene flow methods use stereo images to couple the geometry reconstruction with scene flow estimation. However, the accuracy of such image-based solutions is still constrained by the images quality and the illumination conditions.

In contrary, LiDAR sensors provide accurate measurements of the geometry of a scene (as 3D point clouds) with ongoing developments towards increasing their density (i.e. the sensor resolution). Leveraging this potential is becoming increasingly important for the accurate computation of scene flow from point clouds.

To this end, many existing approaches focus on the 3D domain and present highly accurate scene flow with better generalization compared to the image-based modalities.

However, such approaches involve the expensive computation of Farthest-Point-Sampling (FPS) which decreases their capability to operate on more dense point clouds.

This sampling mechanism is used widely in point-based learning methods to generate strong features for semantic segmentation. The use of FPS is extended to scene flow estimation leading to a robust correlation and an accurate computation of feature similarities.

However, these advantages come at the cost of run-time and exhaustive memory use since pair-wise distances for all points need to be computed iteratively.

Far from this sampling strategy, the structure-based learning approach shows an ability to operate on large-scale point clouds (up to 86.000 points). But its accuracy is significantly limited compared to recent methods which rely on FPS in the context of point-based learning.

Against the background of this prior art, the object of the present invention is inter alia to specify a device which is suitable for overcoming at least some of the above-mentioned disadvantages of the prior art.

The object is solved by the features of the independent claim. The dependent claims specify preferred further embodiments of the invention.

More specifically, the object is solved by a computing device comprising an end-to-end learning-based architecture configured to determine a scene flow from two consecutive scans of point clouds.

The architecture comprises a feature extraction module being configured to extract a feature set from each one of the two consecutive scans of point clouds by using random-sampling and to output the extracted feature sets to a multi-scale scene flow determination module, respectively.

In this context random-sampling means that M out of N points are selected randomly, optionally based on a uniform distribution.

The multi-scale scene flow determination module is configured to determine the scene flow based on the extracted feature sets.

For hierarchical scene flow estimation, as explained above, the known methods depend on either expensive Farthest-Point-Sampling (FPS) or structure-based scaling which decrease their ability to handle a large number of points.

Unlike these known methods, a fully supervised architecture based on random-sampling (RS) for multi-scale scene flow prediction is provided, wherein the proposed architecture is an end-to-end learning-based architecture for accurate and efficient scene flow estimation which can operate on point clouds of very high density, e.g., processing point clouds of more than 250.000 points at once.

In other words, a point-based learning approach that relies on random-sampling (RS) during the hierarchical feature extraction, instead of using FPS, is proposed. It is therefore more efficient, has a smaller memory footprint, and shows superior results at lower runtimes compared to the state-of-the-art methods.

The feature extraction module may comprise a feature pyramid network for extracting the feature sets from the two consecutive scans of point clouds separately.

Each one of the extracted feature sets may comprise first features extracted at a first resolution of the two consecutive scans of point clouds and second features extracted at a second resolution of the two consecutive scans of point clouds, wherein the first resolution is higher than the second resolution.

The feature pyramid network may comprise a first level for extracting the first features and a second level for extracting the second features.

The first and the second level of the feature pyramid network may comprise a local-feature-aggregation module and a down-sampling module with maximum pooling at a top-down pathway of the feature pyramid network, and an up-sampling module and a transposed convolution module at a bottom-up pathway of the feature pyramid network, respectively:

> During local-feature aggregation features in a local neighborhood get merged to improve/refine a feature representation of a central point.

> During down-sampling with maximum pooling a resolution, i.e. a total number of points of the point cloud, is reduced by combining multiple points and their features into a single point. The new feature representation of the combined single point is the maximum of the individual feature representations.

Up-sampling may be seen as the opposite of down-sampling. More specifically, down-sampling can be an inquiry of one closest feature from a source set S to each query point in a set Q by searching one nearest neighbor in XYZ space from S to each query point. The spatial locations of S and Q sets may be generated from one scan but S has less samples (i.e. down-sampled) than Q. That is, down-sampling may use nearest-neighbor interpolation.

Transposed convolution is this context means the inverse operation to a convolution.

In conclusion, the top-down and bottom-up pathways may be symmetric.

The first and the second level of the feature pyramid network may comprise a lateral skip connection between the top-down pathway and the bottom-up pathway, respectively.

In this context, the lateral skip connection may be a connection between corresponding resolutions of the top-down and bottom-up pathways.

The multi-scale scene flow determination module may comprise a first level for computing a first scene flow vector based on the first features and a second level for computing a second scene flow vector based on the second features.

The determined scene flow may comprise the first and the second scene flow vectors. The first and/or the second scene flow may be three dimensional vectors.

The first and the second level of the multi-scale scene flow determination module may comprise a flow embedding module, respectively. The flow embedding module may be configured to correlate and aggregate the extracted feature sets of the two consecutive scans of point clouds.

That is, the intent is to compare (correlate) multiple points (aggregate) between the two consecutive point clouds to find the closest match between them, wherein the spatial distance between corresponding points approximates the scene flow.

The flow embedding module may comprise a maximum embedding layer followed by a first attentive embedding layer for processing the extracted feature sets.

More specifically, the maximum embedding may be performed by two stages: Firstly, an inquiry of multiple, e.g.16, closest feature from the source set S to each query point in a set Q by searching multiple, e.g. 16, nearest neighbor in XYZ space from S to each query point. S and Q sets have a similar number of samples and features but the spatial locations XYZ of both sets are generated from two consecutive scans t and t+1, respectively. Secondly, a maximum pooling for the multiple, e.g. 16, closest features from S is applied to represent each query point q with the maximum feature.

The first attentive embedding is applied after maximum embedding optionally similarly with two stages: Firstly, an inquiry of multiple, e.g. 16, closest features from the source set S to each query point in a set Q by searching multiple, e.g. 16, nearest neighbor in XYZ space from S to each query point. S and Q sets have a similar number of samples and both generated from on scan t but the features of the points are computed from maximum embedding (i.e. the features represent t+1). Secondly, a single feature will be represented for each query point by computing individually scores or weights for the multiple, e.g. 16, closest features and summing-up all weighted features.

The flow embedding module may comprise a feature concatenation as a first lateral connection connecting features of a first one of the two consecutive scans of point clouds to output features of the maximum embedding layer.

During feature concatenation feature vectors may get combined by concatenating, i.e. stacking, them along the feature dimension (e.g., [a,b,c] concatenated with [x,y,z] gets [a,b,c,x,y,z]).

The flow embedding module may comprise a second attentive embedding layer following the first attentive embedding layer for processing the extracted feature sets.

More specifically, the process carried out by the second attentive embedding layer may be similar to the one carried out by the first attentive embedding layer, however the features implicitly may be accumulated or aggregated from a larger space (e.g., $16^2$) rather than only the (e.g. 16) closest features used at the first attentive embedding layer.

The flow embedding module may comprise a residual connection as a second lateral connection connecting the output features of the maximum embedding to output features of the second attentive embedding layer.

Here, a residual connection may bypass the actual flow of data by adding the input of a function to its output (e.g., $x + f(x)$), such that the function is only estimating a residual.

The multi-scale scene flow determination module may comprise a first up-sampling block for up-sampling the second flow vector and to output the up-sampled second flow vector to a first warping module.

Here, warping may be defined as follows: Given a displacement field (e.g., an estimate of the scene flow), each point of a point cloud gets warped by shifting its position according to the given displacement.

The first warping module may be configured to use the up-sampled scene flow vector for warping the first features of a second one of the two consecutive scans of point clouds to output the first warped features of the second one of the two consecutive scans of point clouds to the flow embedding module of the first level of the multi-scale scene flow determination module.

The multi-scale scene flow determination module may comprise a second up-sampling block for up-sampling the second features correlated and aggregated by the flow embedding module of the second level of the multi-scale scene flow determination module and outputting the up-sampled second features to the flow embedding module of the first level.

The multi-scale scene flow determination module may comprise a first (level) scene flow determination module for determining the first scene flow vector based on the first features correlated and aggregated by the flow embedding module of the first level of the multi-scale scene flow determination module.

The following describes an embodiment with reference to figures 1 to 4.

Fig. 1    shows schematically a computing device comprising an end-to-end learning-based architecture according to the embodiment,

Fig. 2    shows schematically a feature extraction module of the architecture of figure 1,

Fig. 3    shows schematically a multi-scale scene flow determination module of the architecture of figure 1,

Fig. 4    shows schematically a flow embedding module of the multi-scale scene flow determination module of figure 3.

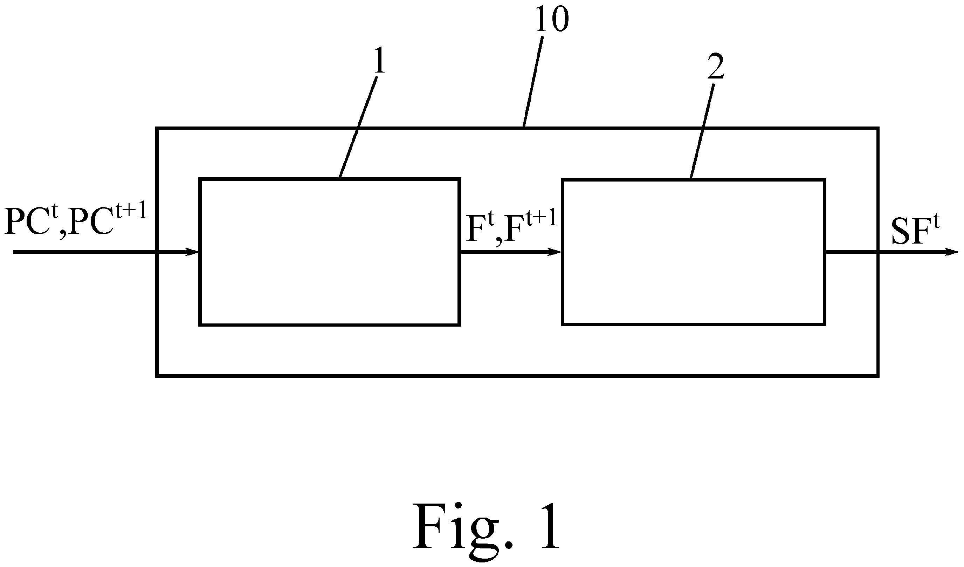

In figure 1 the computing device 10, e.g., a control unit of a vehicle configured to automatically control a motion of the vehicle, is shown.

The computing device 10 comprises a feature extraction module 1 and a multi-scale scene flow determination module 2 forming an end-to-end learning-based architecture configured to determine a scene flow $SF^t$ from two consecutive scans of point clouds $PC^t$, $PC^{t+1}$, e.g., provided by a (not shown) LiDAR sensor or any other sensor that produces a point cloud.

The computing device 10 may be configured to output a control signal to the vehicle determined based on the scene flow $SF^t$ for controlling the motion of the vehicle.

The feature extraction module 1 is configured to extract one feature set $F^t$, $F^{t+1}$ from each one of the two consecutive scans of point clouds $PC^t$, $PC^{t+1}$ by using random-sampling and to output the extracted feature sets $F^t$, $F^{t+1}$ to the multi-scale scene flow determination module 2, respectively.

The multi-scale scene flow determination module 2 is configured to determine the scene flow (vector) $SF^t$ based on the extracted feature sets $F^t$, $F^{t+1}$.

The architecture, i.e. network, predicts the scene flow $SF^t$ from the two consecutive scans of point clouds $PC^t$, $PC^{t+1}$, wherein these point clouds are $PC^t = \{pc_i^t \in \mathbb{R}^3\}_{i=1}^N$ at timestamp t and $PC^{t+1} = \{pc_j^{t+1} \in \mathbb{R}^3\}_{j=1}^M$ at timestamp t + 1, whereas $(pc_i^t, pc_j^{t+1})$ are the 3D Cartesian locations and (N, M) are the sizes of each point cloud. The network is invariant to random permutations of the point clouds $PC^t$, $PC^{t+1}$.

The model/architecture is fully supervised at multiple scales. If $SF_k^t$ is the predicted scene flow and the ground truth is $SF_{GT,k}^t$ at level $l_k$, then the objective can be written as:

$$L(\theta) = \sum_{k=0}^3 \alpha_k \sum_{i=1}^{l_k} \left\| sf_{ki}^t - sf_{GT,ki}^t \right\|_2 ,$$

with $\|.\|_2$ denoting the L$_2$-norm and weights per scale of $\{\{\alpha_k\}_{k=0}^3 \mid \alpha_0 = 0.02, \alpha_1 = 0.04, \alpha_2 = 0.08, \alpha_3 = 0.16\}$.

The network is configured to find similarities between the two point clouds $PC^t$, $PC^{t+1}$ to estimate a motion as the scene flow $SF^t = \{sf_i^t \in \mathbb{R}^3\}_{i=1}^N$ with respect to the reference view at timestamp t, i.e., $sf_i^t$ is the (3D) motion vector for $pc_i^t$.

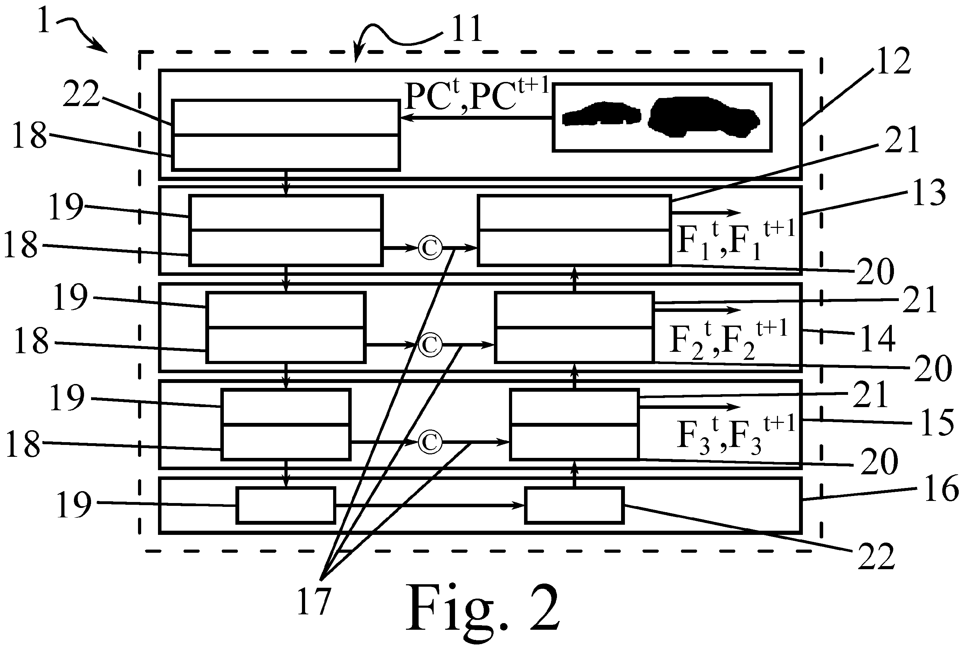

The network is designed to predict the scene flow $SF^t$ at multiple levels through hierarchical feature extraction, flow embedding, warping and scene flow estimation, as will be explained in detail below with reference to figures 2 to 4.

The feature extraction module 2 with output channels is visualized in figure 2.

As shown in figure 2, the feature extraction module 1 comprises a feature pyramid network 11 for extracting the feature sets $F^t$, $F^{t+1}$ from the two consecutive scans of point clouds $PC^t$, $PC^{t+1}$ separately.

The feature extraction module 1 comprises a feature extraction pyramid 11 with two pathways, i.e., a top-down pathway (left side in figure 2) and a bottom-up pathway (right side in figure 2), and lateral skip connections 17 between them..

The top-down pathway computes a hierarchy of features $F_1^t$, $F_2^t$, $F_3^t$, $F_1^{t+1}$, $F_2^{t+1}$, $F_3^{t+1}$ at five levels/scales $L = \{l\}_{k=0}^4$ from fine-to-coarse resolution, where $l_0$ is the full resolution of the two consecutive scans of point clouds $PC^t$, $PC^{t+1}$.

The resolution of the down-sampled point clouds $PC^t$, $PC^{t+1}$ may be fixed as $\{\{\{l\}_{k=0}^4 \mid l_1 = 2048, l_2 = 512, l_3 = 128, l_4 = 32, \}$.

The hierarchy of features $F_1^t$, $F_2^t$, $F_3^t$, $F_1^{t+1}$, $F_2^{t+1}$, $F_3^{t+1}$ forms the feature sets $F^t$, $F^{t+1}$.

The top-down pathway is constructed of local-feature-aggregation modules 18 and down-sampling modules 19 with maximum pooling. That is, the efficient random-sampling strategy is combined with local-feature-aggregation (LFA).

The bottom-up pathway is constructed of up-sampling modules 20 and transposed convolution modules 21.

One local-feature-aggregation module 18 is provided at all scales $l_k$ of the feature pyramid 11 except the last one $l_4$, here the fifth level/layer 16, and each one of the local-feature-aggregation module 18 is configured to start by searching $K_p$ = (for example) 16 neighbors with K-Nearest-Neighbors (KNNs) and to aggregate the features with two attentive pooling layers.

The down-sampling modules 19 are used to reduce the resolution from $l_k$ level to $l_{k+1}$, respectively, wherein the down-sampling modules 19 are configured to sample randomly to the defined resolution and merge the $K_p$ = (for example) 16 nearest neighbors in the higher resolution for each selected sample with maximum pooling as shown in figure 2.

The bottom-up pathway of the feature pyramid network 11 comprises $L = \{l\}_{k=0}^4$ layers excluding the up-sampling to the full input resolution $l_0$. For up-scaling from level $l_k$ to $l_{k+1}$, KNN is used to assign the $K_q$ = 1 nearest neighbor for each point of the higher resolution to the lower one, followed by transposed convolution.

To increase the quality of the features, the above mentioned lateral connections 17 are added from the second to forth level 13 - 15.

More specifically, the first level 12 of the feature extraction pyramid 11 receives the two consecutive scans of point clouds $PC^t$, $PC^{t+1}$ separately with full resolution $l_0$ as input data and comprises a multi-layer perceptron module 22 followed by a local-feature-aggregation module 18 for processing the input data.

The second level 13 of the feature extraction pyramid 11 comprises a down-sampling module 19 followed by a local-feature-aggregation module 18 at the top-down pathway, wherein the down-sampling module 19 of the second level 13 down-samples the two consecutive scans of point clouds $PC^t$, $PC^{t+1}$ from full resolution $l_0$, i.e., first scale, to the next lower resolution/scale $l_1$ before the down-sampled two consecutive scans of point clouds $PC^t$, $PC^{t+1}$ are processed by the local-feature-aggregation module 18 of the second level 13.

The third and the fourth level 14, 15 of the top-down pathway of the feature extraction pyramid 11 have the same structure and functionality as the second level 13 of the feature extraction pyramid 11 of the top-down pathway.

The fifth level 16 of the feature extraction pyramid 11 comprises a down-sampling module 19 but no local-feature-aggregation module 18 at the top-down pathway.

The down-sampled two consecutive scans of point clouds $PC^t$, $PC^{t+1}$ having the lowest resolution/scale $l_4$ are output to a multi-layer perceptron module 22 of the fifth level 16 of the bottom-up pathway of the feature pyramid 11.

The fourth level 15 of the bottom-up pathway of the feature extraction pyramid 11 receives the output data of the multi-layer perceptron module 22 of the fifth level 16 of the bottom-up pathway of the feature pyramid 11 as input data.

The fourth level 15 of the bottom-up pathway of the feature extraction pyramid 11 comprises an up-sampling module 20 and a transposed convolution module 21.

The up-sampling module 20 of the fourth level 15 up-samples the two consecutive scans of point clouds $PC^t$, $PC^{t+1}$ from the lowest resolution $l_4$ to the next higher resolution/scale $l_3$ before the up-sampled two consecutive scans of point clouds $PC^t$, $PC^{t+1}$ are processed by the transposed convolution module 21 of the fourth level 15 of the bottom-up pathway.

The third and the second level 13, 14 of the bottom-up pathway of the feature extraction pyramid 11 have the same structure and functionality as the fourth level 15 of the feature extraction pyramid 11 of the bottom-up pathway.

With the above, the feature extraction module 2 predicts/extracts two feature sets $F^t$, $F^{t+1}$ (i.e.,

$$F_k^t = \{f_{ki}^t \in \mathbb{R}^{C_k}\}_{i=1}^{l_k} \text{ and } F_k^{t+1} = \{f_{kj}^{t+1} \in \mathbb{R}^{C_k}\}_{j=1}^{l_k}$$

) for the sampled two consecutive scans of point clouds $PC^t$, $PC^{t+1}$, respectively. Here, $C_k$ may be the feature dimension fixed as

$$\{\{C\}_k^3 \mid C_1 = 128, C_2 = 256, C_3 = 512\}.$$

That is, each one of the extracted feature sets $F^t$, $F^{t+1}$ comprises first features $F_1^t$, $F_1^{t+1}$ extracted at the first resolution $l_1$ of the two consecutive scans of point clouds $PC^t$, $PC^{t+1}$, second features $F_2^t$, $F_2^{t+1}$ extracted at the second resolution $l_2$ of the two consecutive scans of point clouds $PC^t$, $PC^{t+1}$, and third features $F_3^t$, $F_3^{t+1}$ extracted at the third resolution $l_3$ of the two consecutive scans of point clouds $PC^t$, $PC^{t+1}$, respectively.

The first features $F_1^t$, $F_1^{t+1}$ are extracted at the second level 13 of the feature pyramid 11, the second features $F_2^t$, $F_2^{t+1}$ are extracted at the third level 14 of the feature pyramid 11, and the third features $F_3^t$, $F_3^{t+1}$ are extracted at the fourth level 15 of the feature pyramid 11.

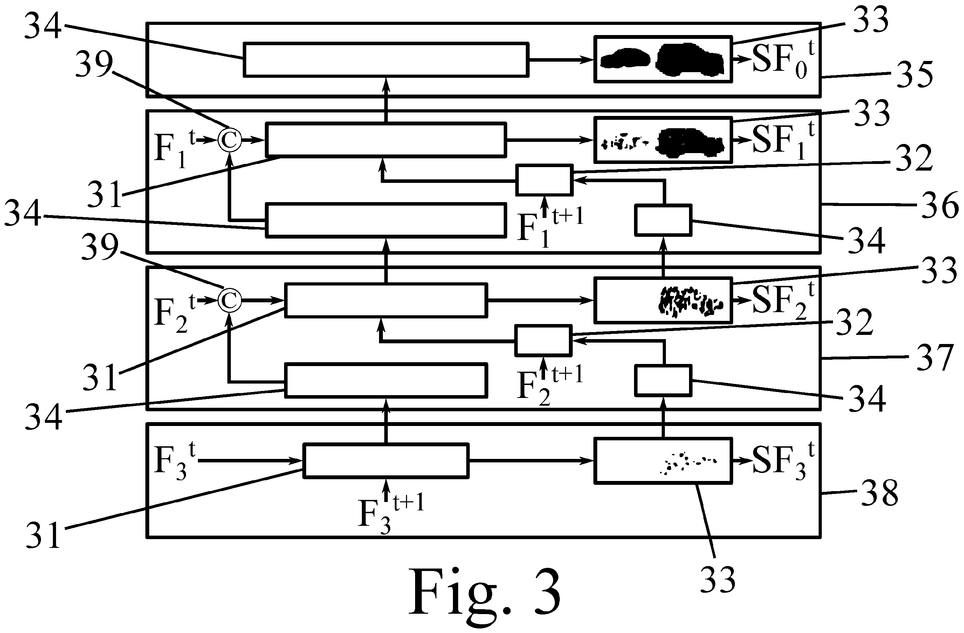

The extracted two feature sets $F^t$, $F^{t+1}$ are then input into the multi-scale scene flow determination module 2 shown in detail in figure 3.

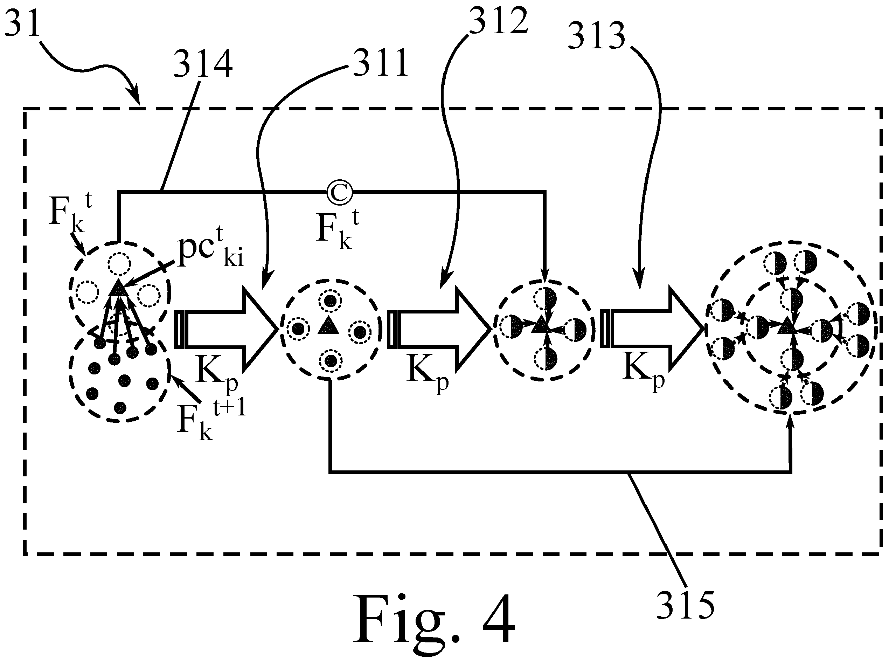

The multi-scale scene flow determination module 2 comprises three flow-embedding modules 31 each one comprising three layers 311, 312, 313 as shown in figure 4, two warping modules 32, four scene flow determination modules 33, five up-sampling modules 34 and two feature concatenation modules 39, wherein the multi-scale scene flow determination module 2 is divided into four levels 35, 36, 37, 38.

The scene flow determination/estimation module 33 may comprise three multi-layer perceptron modules with 64, 32 and 3 output channels, respectively.

The lowest level, here the fourth level 38, up to the second level 36 of the multi-scale scene flow determination module 2 receive the extracted feature sets $F^t$, $F^{t+1}$, wherein the second level 36 receives the features $F_1^t$, $F_1^{t+1}$ extracted at the first resolution $l_1$ of the two consecutive scans of point clouds $PC^t$, $PC^{t+1}$ for computing a second scene flow vector $SF_2^t$, the third level 37 receives the second features $F_2^t$, $F_2^{t+1}$ extracted at the second resolution $l_2$ of the two consecutive scans of point clouds $PC^t$, $PC^{t+1}$ for computing a third scene flow vector $SF_3^t$, and the fourth level 38 receives the third features $F_3^t$, $F_3^{t+1}$ extracted at the third resolution $l_3$ of the two consecutive scans of point clouds $PC^t$, $PC^{t+1}$ for computing a fourth scene flow vector $SF_3^t$.

Therefore, the fourth level 38 of the multi-scale scene flow determination module 2 comprises a flow-embedding module 31 receiving the features $F_3^t$, $F_3^{t+1}$ extracted at the third/lowest resolution $l_3$ of the two consecutive scans of point clouds $PC^t$, $PC^{t+1}$.

The flow embedding module 31 of the fourth level 38 of the multi-scale scene flow determination module 2 is configured to correlate and aggregate the received features $F_3^t$, $F_3^{t+1}$ and to output the correlated and aggregated features $F_3^t$, $F_3^{t+1}$ to the scene flow determination module 33 of the fourth level 38 of the multi-scale scene flow determination module 2.

The scene flow determination module 33 of the fourth level 38 of the multi-scale scene flow determination module 2 determines the fourth scene flow vector $SF_3^t$ based on the features $F_3^t$, $F_3^{t+1}$ correlated and aggregated by the flow embedding module 31 of the first fourth level 38 of the multi-scale scene flow determination module 2.

In other words, the multi-scale determination/estimation starts at the coarsest resolution by prediction $SF_3^t$ with a scene flow determination/estimation module 33 after a flow-embedding module 31.

Thereafter, the estimated scene flow is up-sampled as well as the coming features from the a flow-embedding module 31 to the next higher scale using KNN with $K_q = 1$, as will be explained in detail below with reference to the third level 37 of multi-scale scene flow determination module 2. That holds true mutatis mutandis for the other levels 36, 37 of the multi-scale scene flow determination module 2.

The third level 37 of the multi-scale scene flow determination module 2 comprises a flow-embedding module 31 receiving the features $F_2^t$, $F_2^{t+1}$ extracted at the second resolution $l_2$ of the two consecutive scans of point clouds $PC^t$, $PC^{t+1}$.

The third level 37 of the multi-scale scene flow determination module 2 comprises two up-sampling modules 34, a warping module 32 and a feature concatenation module 39.

One of the two up-sampling modules 34 receives the features $F_3^t$, $F_3^{t+1}$ correlated and aggregated by the flow embedding module 31 of the first fourth level 38, up-samples them and outputs the them afterwards to the feature concatenation module 39 of the third level 37 of the multi-scale scene flow determination module 2, where they are concatenated with the features $F_2^t$ extracted at the second resolution $l_2$ of the first one of the two consecutive scans of point clouds $PC^t$ and output to the flow-embedding module 31 of the third level 37 of the of the multi-scale scene flow determination module 2.

The other one of the two up-sampling modules 34 receives the fourth scene flow vector $SF_3^t$, up-samples and outputs it afterwards to the warping module 32 of the third level 37 of the multi-scale scene flow determination module 2, where it is warped with the features $F_2^{t+1}$ extracted at the second resolution $l_2$ of the second one of the two consecutive scans of point clouds $PC^{t+1}$ and output to the flow-embedding module 31 of the third level 37 of the of the multi-scale scene flow determination module 2.

In general, the warping module/layer 32 utilizes the up-sampled scene flow $SF_k^t$ at scale level $l_k$ to warp $PC_k^{t+1}$ towards $PC_k^t$. The warping module/layer 32 warps firstly $PC_k^t$ into $PC_k^{t+1}$ using the upsampled $SF_k^t$. Secondly, KNN with $K_q = 1$ is used to find the nearest neighbors of the warped $\widetilde{PC}_k^{t+1}$ in $PC_k^{t+1}$ and to associate the predicted scene flow with $PC_k^{t+1}$. Lastly, $PC_k^{t+1}$ is warped into $\widetilde{PC}_k^t$ using the associated, inverted scene flow.

The scene flow determination module 33 of the third level 37 of the multi-scale scene flow determination module 2 determines the third scene flow vector $SF_2^t$ based on the features $F_2^t$, $F_2^{t+1}$ correlated and aggregated by the flow embedding module 31 of the third level 37 of the multi-scale scene flow determination module 2.

The second level 36 of the multi-scale scene flow determination module 2 comprises a flow-embedding module 31 receiving the features $F_1^t$, $F_1^{t+1}$ extracted at the first resolution $l_1$ of the two consecutive scans of point clouds $PC^t$, $PC^{t+1}$.

The second level 36 of the multi-scale scene flow determination module 2 comprises two up-sampling modules 34, a warping module 32 and a feature concatenation module 39.

One of the two up-sampling modules 34 receives the features $F_2^t$, $F_2^{t+1}$ correlated and aggregated by the flow embedding module 31 of the third level 37, up-samples them and outputs the them afterwards to the feature concatenation module 39 of the second level 36 of the multi-scale scene flow determination module 2, where they are concatenated with the features $F_1^t$ extracted at the first resolution $l_1$ of the first one of the two consecutive scans of point clouds $PC^t$ and output to the flow-embedding module 31 of the second level 36 of the of the multi-scale scene flow determination module 2.

The other one of the two up-sampling modules 34 receives the third scene flow vector $SF_3^t$, up-samples and outputs it afterwards to the warping module 32 of the second level 36 of the multi-scale scene flow determination module 2, where it is warped with the features $F_1^{t+1}$ extracted at the first resolution $l_1$ of the second one of the two consecutive scans of point clouds $PC^{t+1}$ and output to the flow-embedding module 31 of the second level 36 of the of the multi-scale scene flow determination module 2.

The scene flow determination module 33 of the second level 36 of the multi-scale scene flow determination module 2 determines the second scene flow vector $SF_1^t$ based on the features $F_1^t$, $F_1^{t+1}$ correlated and aggregated by the flow embedding module 31 of the second level 36 of the multi-scale scene flow determination module 2.

The first level 35 of the multi-scale scene flow determination module 2 comprises an up-sampling module 34 and a scene flow determination module 33, wherein the up-sampling module 34 receives the features $F_1^t$, $F_1^{t+1}$, correlated and aggregated by the flow embedding module 31 of the second level 37 and up-samples them and outputs the them afterwards to the scene flow determination module 33 of the first level 35 of the multi-scale scene flow determination module 2.

The scene flow determination module 33 of the first level 35 of the multi-scale scene flow determination module 2 determines the first scene flow vector $SF_0^t$ based on the up-sampled features $F_1^t$, $F_1^{t+1}$ correlated and aggregated by the flow embedding module 31 of the first level 35 of the multi-scale scene flow determination module 2.

The determined scene flow $SF^t$ comprises the first to fourth flow vector $SF_0^t$, $SF_1^t$, $SF_2^t$, $SF_3^t$.

In the following the flow embedding module 31 will be explained in detail with respect to figure 4.

The flow embedding module 31 comprises a maximum embedding layer 311 followed by a first attentive embedding layer 312 and a second attentive embedding layer 313 following the first attentive embedding layer 312 for processing the extracted features $F_k^t$, $F_k^{t+1}$.

The flow embedding module 31 further comprises a feature concatenation as a first lateral connection 314 connecting features of the first one of the two consecutive scan of point clouds Fk to output features of the maximum embedding layer 311 and a residual connection as a second lateral connection 315 connecting the output features of the maximum embedding layer 311 to output features of the second attentive embedding layer 313.

In the flow embedding module 31 three sequential steps with lateral connections as presented in Figure 4 are combined. Starting by searching $K_p$ = *(for example)* 16 nearest neighbors for each point $pc_{ki}^t$ within $PC_k^{t+1}$ at each scale $l_k$, wherein the flow embedding consists of the following:

- 1st Embedding at the maximum embedding layer 311 (Patch-to-Point): It starts by grouping multiple, e.g. 16, nearest features of $F_k^{t+1}$ with each point $pc_{ki}^t$. Thereafter, these grouped features will be passed into two multi-layer perceptrons followed by maximum pooling for feature aggregation. Each multi-layer perceptron yields features of $C_k$ dimensions at scale $l_k$.

- 2nd Embedding at the first attentive layer 312 (Point-to-Patch): It aggregates the multiple, e.g. 16, nearest features within the reference point cloud into each $pc_{ki}^{t}$ by computing attention scores and summation, i.e. the features are weighted.

- 3rd Embedding at the second attentive layer 313 (Point-to-Dilated-Patch): It repeats the previous step on the previous result with new attention scores for the multiple, e.g. 16, nearest features. This embedding layer 313 results in an increased receptive field.

That is, the number of the nearest neighbors for the 3rd Embedding is not increased, but features from a larger area are aggregated by repeating the aggregation mechanism (see Figure 4). This way, a larger receptive field with a small number of nearest neighbors can be obtained, which is computationally more efficient.

The attention-based aggregation technique learns attention scores for each embedded feature $f_{ki}^{t}$, followed by a softmax to suppress the least correlated features. Then, the features are weighted by the attention scores and summed up. Additionally, the features Fk are concatenated and the residual connection is added to increase the quality of the flow embedding.

**Reference signs list**

1       feature extraction module
2       multi-scale scene flow determination module
10      computing device
11      feature extraction pyramid
12      first level of the feature extraction pyramid
13      second level of the feature extraction pyramid
14      third level of the feature extraction pyramid
15      fourth level of the feature extraction pyramid
16      fifth level of the feature extraction pyramid
17      lateral skip connection
18      local-feature-aggregation module
19      down-sampling module
20      up-sampling module
21      transposed convolution module
22      multi-layer perceptron module
31      flow-embedding module
311     maximum embedding layer
312     first attentive embedding layer
313     second attentive embedding layer
314     first lateral connection
315     second lateral connection
32      warping module
33      scene flow determination module
34      up-sampling module
35      first level of the scene flow determination module
36      second level of the scene flow determination module
37      third level of the scene flow determination module
38      fourth level of the scene flow determination module
39      feature concatenation module
$F^{t}$, $F^{t+1}$       extracted feature sets at time t and t+1

$F_{k}^{t}$, $F_{k}^{t+1}$       feature at time t and t+1

$F_{1}^{t}$, $F_{2}^{t}$, $F_{3}^{t}$, $F_{1}^{t+1}$, $F_{2}^{t+1}$, $F_{3}^{t+1}$       first to third feature at time t and t+1

$SF^{t}$     scene flow

$SF_{0}^{t}$, $SF_{1}^{t}$, $SF_{2}^{t}$, $SF_{3}^{t}$       first to fourth scene flow fields

$PC^{t}$, $PC^{t+1}$       first and second point clouds at time t and t+1

**Claims**

1. A computing device (10) comprising an end-to-end learning-based architecture configured to determine a scene flow ($SF^t$) from two consecutive scans of point clouds ($PC^t$, $PC^{t+1}$), **characterized in that** the architecture comprises:

   - a feature extraction module (1) being configured to extract a feature set ($F^t$, $F^{t+1}$) from each one of the two consecutive scans of point clouds ($PC^t$, $PC^{t+1}$) by using random-sampling and to output the extracted feature sets ($F^t$, $F^{t+1}$) to a multi-scale scene flow determination module (2), respectively, and
   - the multi-scale scene flow determination module (2) being configured to determine the scene flow ($SF^t$) based on the extracted feature sets ($F^t$, $F^{t+1}$).

2. The computing device (10) according to claim 1, **characterized in that** the feature extraction module (1) comprises a feature pyramid network (11) for extracting the feature sets ($F^t$, $F^{t+1}$) from the two consecutive scans of point clouds ($PC^t$, $PC^{t+1}$) separately.

3. The computing device (10) according to claim 1 or 2, **characterized in that** each one of the extracted feature sets ($F^t$, $F^{t+1}$) comprises first features $F_1^t$, $F_1^{t+1}$ ) extracted at a first resolution ($l_1$) of the two consecutive scans of point clouds ($PC^t$, $PC^{t+1}$) and second features $(F_2^t, F_2^{t+1})$ extracted at a second resolution ($l_2$) of the two consecutive scans of point clouds ($PC^t$, $PC^{t+1}$), wherein the first resolution ($l_1$) is higher than the second resolution ($l_2$).

4. The computing device (10) according to claim 3, **characterized in that** the feature pyramid network (11) comprises a first level (12) for extracting the first features $(F_1^t, F_1^{t+1})$ ) and a second level (13) for extracting the second features $(F_2^t, F_2^{t+1})$.

5. The computing device (10) according to claim 4, **characterized in that** the first and the second level (12, 13) of the feature pyramid network (11) comprises, respectively:

   - a local-feature-aggregation module (18) and a down-sampling module (19) with maximum pooling at a top-down pathway of the feature pyramid network (11), and
   - an up-sampling module and a transposed convolution module at a bottom-up pathway of the feature pyramid network (11).

6. The computing device (10) according to claim 4 or 5, **characterized in that** the first and the second level (12, 13) of the feature pyramid network (11) comprises a lateral skip connection (17) between the top-down pathway and the bottom-up pathway, respectively.

7. The computing device (10) according to any of claims 3 to 6, **characterized in that** the multi-scale scene flow determination module (2) comprises a first level (36) for computing a first scene flow vector $(SF_1^t)$ based on the first features $(F_1^t, F_1^{t+1})$ and a second level (37) for computing a second scene flow vector $(SF_2^t)$ based on the second features $(F_2^t, F_2^{t+1})$.

8. The computing device (10) according to claim 7, **characterized in that** the determined scene flow ($SF^t$) comprises the first and the second flow vector $(SF_1^t, SF_2^t)$.

9. The computing device (10) according to claim 7 or 8, **characterized in that** the first and the second level (36, 37) of the multi-scale scene flow determination module (2) comprise a flow embedding module (31), respectively, wherein the flow embedding module (31) is configured to correlate and aggregate the extracted feature sets ($F^t$, $F^{t+1}$) of the two consecutive scans of point clouds ($PC^t$, $PC^{t+1}$).

10. The computing device (10) according to claim 9, **characterized in that** the flow embedding module (31) comprises a maximum embedding layer (311) followed by a first attentive embedding layer (312) for processing the extracted feature sets ($F^t$, $F^{t+1}$).

11. The computing device (10) according to claim 10, **characterized in that** the flow embedding module (31) comprises a feature concatenation as a first lateral connection (314) connecting features $\left(F_k^t\right)$ of a first one of the two consecutive scans of point clouds to output features of the maximum embedding layer (311).

12. The computing device according to claim 10 or 11, **characterized in that** the flow embedding module (31) comprises a second attentive embedding layer (313) following the first attentive embedding layer (312) for processing the extracted feature sets ($F^t$, $F^{t+1}$).

13. The computing device according to claim 12, **characterized in that** the flow embedding module (31) comprises a residual connection as a second lateral connection (315) connecting the output features of the maximum embedding layer (311) to output features of the second attentive embedding layer (313).

14. The computing device (10) according to any of claims 9 to 13, **characterized in that** the multi-scale scene flow determination module (2) comprises:

    - a first up-sampling module (34) for up-sampling the second flow vector $\left(SF_2^t\right)$ and to output the up-sampled second flow vector $\left(SF_2^t\right)$ to a first warping module (32),

    - the first warping module (32) for using the up-sampled second scene flow vector $\left(SF_2^t\right)$ for warping the first features ($F^{t+1}$) of a second one of the two consecutive scans of point clouds ($PC^{t+1}$) to output the first warped features ($F^{t+1}$) of the second one of the two consecutive scans of point clouds ($PC^{t+1}$) to the flow embedding module (31) of the first level (36) of the multi-scale scene flow determination module (2), and

    - a second up-sampling block (34) for up-sampling the second features $\left(F_2^t, F_2^{t+1}\right)$ correlated and aggregated by the flow embedding module (31) of the second level (37) of the multi-scale scene flow determination module (2) and outputting the up-sampled second features $\left(F_2^t, F_2^{t+1}\right)$ to the flow embedding module (31) of the first level (36) of the multi-scale scene flow determination module (2).

15. The computing device (10) according to any of claims 9 to 14, **characterized in that** the multi-scale scene flow determination module (2) comprises a scene flow determination module (33) for determining the first scene flow vector $\left(SF_1^t\right)$ based on the first features $\left(F_2^t, F_2^{t+1}\right)$ correlated and aggregated by the flow embedding module (31) of the first level (36) of the multi-scale scene flow determination module (2).

Fig. 1

Fig. 2

Fig. 3

Fig. 4

**EUROPEAN SEARCH REPORT**

Europäisches
Patentamt
European
Patent Office
Office européen
des brevets

Application Number

EP 21 18 5687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUANGMING WANG ET AL: "Hierarchical Attention Learning of Scene Flow in 3D Point Clouds", ARXIV.ORG, CORNELL UNIVERSITY LIBRARY, 201 OLIN LIBRARY CORNELL UNIVERSITY ITHACA, NY 14853, 12 October 2020 (2020-10-12), XP081784283, | 1-4,7-15 | INV. G06T7/246 |
| Y | * abstract * * page 3 - page 6; figures 1-4 * | 5,6 | |
| X | WENXUAN WU ET AL: "PointPWC-Net: A Coarse-to-Fine Network for Supervised and Self-Supervised Scene Flow Estimation on 3D Point Clouds", ARXIV.ORG, CORNELL UNIVERSITY LIBRARY, 201 OLIN LIBRARY CORNELL UNIVERSITY ITHACA, NY 14853, 31 July 2020 (2020-07-31), XP081726066, | 1-9,14, 15 | |
| Y | * abstract * | 5,6 | |
| A | * page 5 - page 7; figure 1 * | 10-13 | |
| A | LIU XINGYU ET AL: "FlowNet3D: Learning Scene Flow in 3D Point Clouds", 2019 IEEE/CVF CONFERENCE ON COMPUTER VISION AND PATTERN RECOGNITION (CVPR), IEEE, 15 June 2019 (2019-06-15), pages 529-537, XP033686962, DOI: 10.1109/CVPR.2019.00062 [retrieved on 2020-01-08] * abstract * * page 3 - page 5; figures 2,3 * | 1-15 | TECHNICAL FIELDS SEARCHED (IPC) G06T |

The present search report has been drawn up for all claims

| Place of search | Date of completion of the search | Examiner |
|---|---|---|
| Munich | 13 December 2021 | Katsoulas, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)